# FASCICULE DE BREVET EUROPEEN

(11) **EP 3 802 095 B1**
(45) Date de publication et mention de la délivrance du brevet: **10.04.2024**
(21) Numéro de dépôt: 19733856.9
(22) Date de dépôt: 21.05.2019
(51) Int. Cl.: B31B 50/00, B31B 50/62, C09J 129/04, C08K 5/00, C09J 5/00, C08K 5/42, C08K 5/3465, C08K 5/1545, C08K 5/05

(54) **PROCÉDÉ DE FABRICATION D'EMBALLAGES RIGIDES À PARTIR D'UN SUBSTRAT CARTONNÉ**
VERFAHREN ZUR HERSTELLUNG VON STEIFEN VERPACKUNGEN AUS EINEM KARTONSUBSTRAT
METHOD FOR MANUFACTURING RIGID PACKAGING FROM A CARDBOARD SUBSTRATE

(30) Priorité: 25.05.2018 FR 1854458
(43) Date de publication de la demande: 14.04.2021
(73) Titulaire: Bostik SA, 92700 Colombes (FR)
(72) Inventeur: DUFOUR, Stéphane, 60280 Venette (FR); VALERA, Nadège, 60280 Venette (FR); PEYRAS-CARRATTE, Jérémie, 60280 Venette (FR)
(74) Mandataire: Arkema Patent
(86) Numéro de dépôt international: PCT/FR2019/051151
(87) Numéro de publication internationale: WO 2019/224473

(56) Documents cités:
- EP-A1- 2 738 231
- WO-A1-03/021534
- WO-A1-2012/049413
- US-A- 5 375 722
- US-A1- 2003 138 653

## Description

### DOMAINE DE L'INVENTION

La présente invention a pour objet un procédé de fabrication d'emballages rigides à partir d'un substrat cartonné contenant au moins un azurant optique. Elle concerne également une composition adhésive aqueuse mise en oeuvre dans ledit procédé.

### ARRIERE PLAN TECHNOLOGIQUE

Les emballages rigides cartonnés, comme par exemple les boîtes, les caisses ou les étuis cartonnés, sont bien connus et largement utilisés en vue de l'emballage des articles les plus divers, et notamment de produits alimentaires.

Ces emballages, par exemple de forme parallélépipédique, sont généralement fabriqués dans des lignes industrielles, par un procédé d'assemblage d'une forme plane qui a été préalablement rainurée en surface et découpée dans un substrat cartonné aux dimensions souhaitées pour l'emballage final. Cette forme plane qui comprend les 6 faces du parallélépipède, est munie d'une ou plusieurs pattes latérales (également dénommées "rabats" et en anglais "side seams" ou "flaps") qui sont destinées à être encollées, puis pliées, selon les rainures aménagées sur le patron, en vue de l'assemblage par collage. Ladite forme plane est également désignée dans le métier par les termes de "patron" ou "forme de découpe". La partie du patron autre que la ou les pattes latérales, qui correspond aux 6 faces du parallélépipède est dénommée "corps".

Cette opération d'assemblage par collage est réalisée industriellement au moyen d'une machine appelée plieuse-colleuse. La colle mise en oeuvre est le plus souvent une composition adhésive aqueuse qui est généralement appliquée à une température comprise entre 15 et 35°C.

Après application de la colle, au niveau du poste d'encollage de la ligne industrielle, sur au moins une patte latérale de la forme de découpe, ladite patte est ensuite pliée par des moyens mécaniques adaptés, de telle sorte que les pattes latérales encollées sont pressées sur le corps du patron, au niveau d'une zone spécifique de celui-ci appelée "zone de réception de patte" (ou en anglais "landing zone"), de manière à former rapidement avec ladite zone un joint adhésif solide. Ainsi, la forme de découpe plane est assemblée en un parallélépipède constituant l'emballage cartonné rigide souhaité.

Au niveau du poste d'encollage de la ligne industrielle, la colle peut être appliquée sur le substrat défilant à une certaine vitesse au moyen d'une buse à lèvre (dite buse contact) ou d'un disque, qui déposent par contact sur les pattes latérales des traits de longueur variable et d'épaisseur comprise entre 1 mm et 1 cm. Ces 2 techniques d'application sont très répandues industriellement et assez économiques. Cependant elles ne permettent pas d'obtenir des vitesses de ligne élevées et donc une productivité satisfaisante.

On peut remédier à cet inconvénient grâce à la mise en oeuvre, dans le poste d'encollage, de buses qui ne sont pas en contact avec le substrat cartonné (dites "sans contact"). Ces buses permettent de déposer la colle non seulement sous la forme de traits, mais aussi de points, ce qui permet d'optimiser la quantité appliquée et donc de diminuer la consommation de colle. Les buses sans contact permettent d'atteindre une excellente productivité, découlant de vitesses de ligne très élevées, supérieures par exemple à 300 m/minute.

Cependant, à de telles vitesses de ligne, se pose avec une acuité particulière le problème de la localisation précise des points (ou traits) de colle à déposer sur les pattes latérales du patron cartonné.

Lors du passage du patron cartonné dans le poste d'encollage de la ligne, il est en effet impératif que lesdits points (ou traits) de colle soient parfaitement positionnés sur les pattes latérales, de telles sorte que celles-ci, lors du passage au poste de pliage, puissent adhérer fermement sur la zone de réception de patte prévue sur le corps du patron, et ainsi assurer la solidité de l'emballage rigide.

S'il n'en est pas ainsi, des problèmes peuvent survenir. Par exemple, si le nombre de points (ou de traits) déposés sur une patte latérale n'est pas suffisant, alors ladite patte risque de ne pas adhérer convenablement à la zone de réception, et la cohésion de l'emballage final risque d'être compromise. Ou encore, si une quantité excessive de colle est appliquée, ou bien est appliquée sur une zone incorrecte, alors un excès de colle peut être exsudé au niveau du joint adhésif entre la patte latérale et la zone de réception correspondante, ce qui peut entraîner le collage indésirable des emballages cartonnés entre eux dans la ligne industrielle de production, et l'arrêt de celle-ci.

Le risque de voir de tels problèmes survenir est renforcé du fait de la relative distance entre la buse sans contact et le patron cartonné, de la géométrie souvent complexe des patrons mis en oeuvre, et de la vitesse de défilement très élevée de ces derniers dans la ligne.

Pour réduire ce risque, des systèmes de détection et de vérification en ligne de l'application de la colle sur les patrons cartonnés peuvent être mis en oeuvre, en temps réel, dans les lignes de production des industriels concernés.

Un tel système est par exemple décrit dans la demande internationale WO 2003/021534. Cette demande mentionne la possibilité d'inclure un colorant UV dans la colle et, après éclairage du patron cartonné encollé au moyen d'une source lumineuse UV, d'utiliser un détecteur photoélectrique pour détecter la présence effective d'un trait de colle sur une certaine zone, à partir de la lumière réfléchie. Un tel colorant UV est souvent désigné dans le métier par les termes de "traceur UV".

La capacité effective d'un tel colorant UV à être inclus dans une colle, en tant que indicateur ou traceur de sa présence sur un article, nécessite toutefois que le système de détection qui met généralement en oeuvre un détecteur photographique (appareil photo ou caméra) soit capable, en raison d'un contraste suffisant, de détecter un point (ou un trait) de colle comprenant ledit traceur sur le substrat cartonné où il a été appliquée.

Or, il a à présent été reconnu qu'une difficulté particulière existe dans le cas des substrats cartonnés contenant un azurant optique, pour lequel les traceurs UV usuels ne fonctionnent pas, en raison d'un contraste insuffisant.

Les azurants optiques sont des adjuvants qui sont introduits lors de la fabrication de la pâte à papier, et qui sont destinés à donner l'illusion d'un carton très blanc. Ces produits ont la particularité d'augmenter la blancheur apparente en absorbant les rayonnements ultra-violets puis en les restituant sous forme de rayonnements perceptibles par l'oeil.

La référence WO 2003/021534 mentionne comme inconvénient de l'utilisation d'un colorant UV, la présence d'un revêtement blanc sur le patron, qui est susceptible de réfléchir une quantité significative de lumière et d'entraîner des erreurs de mesure. Cette référence ne mentionne toutefois nullement le cas d'un substrat cartonné contenant un azurant optique.

US 2003/138653 divulgue des matériaux d'emballage transparents ou partiellement transparents qui comprennent des colorants qui ont le même spectre d'absorption que les colorants contenus dans les denrées emballées, ou un spectre d'absorption similaire.

La présente invention a pour but de proposer un procédé de fabrication d'emballages cartonnés à partir d'un substrat cartonné contenant au moins un azurant optique, pour lequel les procédés usuels de détection et de vérification en ligne de l'application de la colle sur ledit substrat peuvent être conduits de manière plus fiable, en raison d'un contraste amélioré entre le trait ou point de colle et ledit substrat.

Un autre but de la présente invention est de proposer un procédé de fabrication d'emballages cartonnés qui présentent une capacité améliorée au conditionnement de produits alimentaires, en raison de l'absence de risque toxicologique lié à la colle mise en oeuvre.

Il a à présent été trouvé que ces buts peuvent être atteints en totalité ou en partie au moyen du procédé objet de l'invention.

### DESCRIPTION DETAILLEE DE L'INVENTION

La présente invention a donc pour objet un procédé de fabrication d'emballages rigides à partir d'un substrat cartonné contenant au moins un azurant optique, ledit procédé comprenant une étape A) de dépose sur ledit substrat d'une composition adhésive aqueuse comprenant :
- un polymère P choisi parmi un homopolymère d'acétate de vinyle et un copolymère EVA d'éthylène et d'acétate de vinyle ; et
- un composé T choisi parmi la pyranine, la riboflavine, la vitamine E et la vitamine A.

Un azurant optique est une molécule qui absorbe les rayonnements ultra-violets dont la longueur d'onde est comprise entre 300 et 400 nm, et réémet ensuite l'énergie correspondante par fluorescence dans la partie du spectre visible comprise entre 400 et 500 nm. Il a été trouvé que la pyranine, la riboflavine, la vitamine E et la vitamine A absorbent également les rayons UV, et réémettent un rayonnement dont la longueur d'onde est supérieure à 500 nm. Ainsi la longueur d'onde du rayonnement réémis par la pyranine est comprise entre 500 et 525 nm. Elle est de 525 nm pour la riboflavine et la vitamine E, et de 510 nm pour la vitamine A.

Ces longueurs d'onde étant situées en dehors du domaine de longueur d'onde du rayonnement réémis par l'azurant optique, il en résulte, lors de l'analyse des images prises par le détecteur photographique, un excellent contraste entre un point ou un trait de colle et ledit substrat cartonné, permettant une détection efficace d'un point ou trait de colle sur ledit substrat.

La pyranine, qui est le sel triple de sodium de l'acide 8-Hydroxypyrene-1,3,6-trisulfonique est un produit disponible dans le commerce, par exemple auprès de la société Rhein Chemie qui appartient au groupe LANXESS.

La riboflavine est un composé bien connu également sous la dénomination de vitamine B2. Les actions de la vitamine B2 se situent au niveau du métabolisme et de l'assimilation des nutriments, ainsi que dans le fonctionnement des yeux, de la peau et des cheveux. Elle est présente dans de nombreuses sources alimentaires comme le lait, la levure de bière, le soja, les abats, les germes de blé et la viande de porc. La ribloflavine est disponible commercialement auprès des sociétés DSM et BASF.

La vitamine E a un rôle d'antioxydant. Elle est présente dans la plupart des huiles végétales (huile de germe de blé, de tournesol, de soja, d'arachide ou d'olive). Elle est disponible commercialement auprès de la société BASF.

La vitamine A intervient dans la croissance des os et la synthèse de pigments de l'oeil. Elle est contenue, entre autre, dans la carotte, le melon, l'abricot, la pêche jaune ou la mangue. Elle est également disponible commercialement auprès de la société BASF.

L'azurant optique est réparti de manière homogène soit dans la masse du substrat cartonné, par incorporation dans la suspension de fibres lors de la préparation de la pâte à papier, soit dans un revêtement de surface dudit substrat, destiné à être au contact de la composition adhésive, par des moyens connus de l'homme du métier.

On peut citer comme exemples de tels azurants optiques des composés appartenant à la famille des triazole-stilbènes di et tétra sulfonés, ainsi que les dérivés de biphényl-stilbènes di-sulfonés.

Selon un mode de réalisation préféré de l'invention, le substrat cartonné à partir duquel sont fabriqués les emballages rigides est mis en oeuvre sous la forme d'un patron. On entend par substrat cartonné un substrat cellulosique dont le grammage est généralement compris entre 160 et 600 g/m².

Les emballages rigides se présentent généralement sous la forme de polyèdres, et sont fabriqués à partir d'un patron qui comprend les faces planes polygonales (jointes par leurs arêtes) et des pattes latérales destinées à être encollées, puis pliées, en vue de l'assemblage par collage.

Selon un mode de réalisation plus particulièrement préféré du procédé selon l'invention, les emballages rigides se présentent sous la forme d'un parallélépipède rectangle, et sont fabriqués à partir d'un patron qui comprend les 6 faces planes rectangulaires dudit parallélépipède et des pattes latérales.

Selon un autre mode de réalisation préféré pour l'invention, la composition adhésive est déposée sur les pattes latérales du patron.

Dans le cas où l'azurant optique est réparti de manière homogène dans un revêtement de surface du substrat cartonné, il est également possible que ledit revêtement ne soit pas présent sur certaines zones dudit substrat, notamment sur certaines pattes latérales de collage. Dans ce cas, et selon un mode de réalisation du procédé de l'invention, outre son dépôt sur les pattes latérales du patron qui contiennent l'azurant optique, la composition adhésive aqueuse peut également être déposée sur une ou des pattes latérales exemptes d'azurant optique. Un tel dépôt permet également une détection efficace du point ou trait correspondant, en raison d'un excellent contraste avec ladite patte.

Selon encore un autre mode de réalisation de l'invention, la composition adhésive est déposée au moyen d'une buse sans contact et sous la forme de traits et/ou de points. L'épaisseur de ces traits et/ou points est variable et peut être comprise entre 1 mm et 1 cm. La quantité de colle appliquée sur le substrat cartonné dans les machines plieuses colleuses industrielles est très variable, dépendant notamment de la nature du substrat, de la taille du patron, et des pattes de collage. Dans les conditions de la pratique industrielle, cette quantité est généralement exprimée relativement au mètre linéaire du substrat défilant à une vitesse pouvant aller jusqu'à 300 m/minute ; elle est de l'ordre de 1 à 10 g/m.

De préférence, le procédé selon l'invention comprend également, consécutivement à l'étape A), une étape B) de détection, en présence d'une source de rayons UV et au moyen d'un détecteur photographique, de la position des points et/ou traits de composition adhésive sur le substrat, notamment sur le patron, plus particulièrement sur les pattes latérales. Ladite étape de détection est avantageusement rendue plus efficace, grâce au contraste amélioré entre le trait de colle et le substrat cartonné contenant l'azurant optique. Elle est rendue également possible, lorsqu' un éventuel substrat cartonné exempt d'azurant optique est également présent dans le substrat. Cet effet avantageux est obtenu au moyen de la composition adhésive aqueuse spécifique mise en oeuvre, et notamment à la présence du composé T dans celle-ci.

Selon une variante tout particulièrement préférée de l'invention, le composé T compris dans la composition adhésive aqueuse est choisi parmi la riboflavine, la vitamine E et la vitamine A. Dans le cas où les ingrédients de la composition adhésive aqueuse autres que le composé T permettent de conférer à cette dernière, en raison de leur innocuité toxicologique, l'aptitude au contact alimentaire, le fait d'ajouter en outre à ladite composition une molécule naturellement présente dans l'organisme comme la riboflavine (ou Vitamine B2) ou les vitamines E ou A n'entraîne donc, avantageusement, aucun risque additionnel relativement audit contact pour le consommateur du produit alimentaire conditionné dans l'emballage rigide.

Selon une variante encore davantage préférée de l'invention, le composé T est la riboflavine.

La quantité de composé T compris dans la composition adhésive aqueuse peut varier de 0,001 à 1 % en poids, de préférence de 0,005 à 0,05 %, sur la base du poids total de ladite composition.

La composition adhésive aqueuse mise en oeuvre dans le procédé selon l'invention comprend, outre le composé T, un polymère P choisi parmi un homopolymère d'acétate de vinyle et un copolymère EVA d'éthylène et d'acétate de vinyle.

La dite composition adhésive peut également comprendre un mélange desdits copolymère et homopolymère.

Selon une variante préférée, le polymère P compris dans la composition adhésive est un copolymère EVA d'éthylène et d'acétate de vinyle.

Le copolymère d'éthylène et d'acétate de vinyle est, de préférence, formé à partir d'une quantité supérieure à 50 % d'acétate de vinyle, de préférence supérieure à 75 %, plus préférentiellement supérieure à 85 %, ledit pourcentage étant exprimé en poids sur la base du poids total des 2 comonomères. Un tel copolymère est largement disponible dans le commerce sous la forme d'une dispersion aqueuse. On peut citer par exemple le Mowilith^{®} LDM 1081 (disponible auprès de la société CELANESE) qui est une dispersion aqueuse à 54 % poids/poids, en extrait sec d'un copolymère constitué d'environ 80 % poids/poids de monomère acétate de vinyle et d'environ 20 % poids/poids de monomère éthylène.

Outre les ingrédients cités ci-dessus, la composition adhésive aqueuse peut également comprendre, à titre optionnel, d'autres additifs tels qu'un plastifiant, un biocide et un antimousse.

La présente invention a également pour objet la composition adhésive aqueuse comprenant :
- un polymère P choisi parmi un homopolymère d'acétate de vinyle, un copolymère EVA d'éthylène et d'acétate de vinyle ; et
- un composé T choisi parmi la pyranine, la riboflavine, la vitamine E et la vitamine A.

La composition adhésive aqueuse objet de l'invention est telle que définie ci-dessus dans la description du procédé de fabrication d'emballages rigides objet de l'invention, et présente également les différents modes de réalisation qui ont été détaillés dans la description dudit procédé.

### BREVE DESCRIPTION DE LA FIGURE

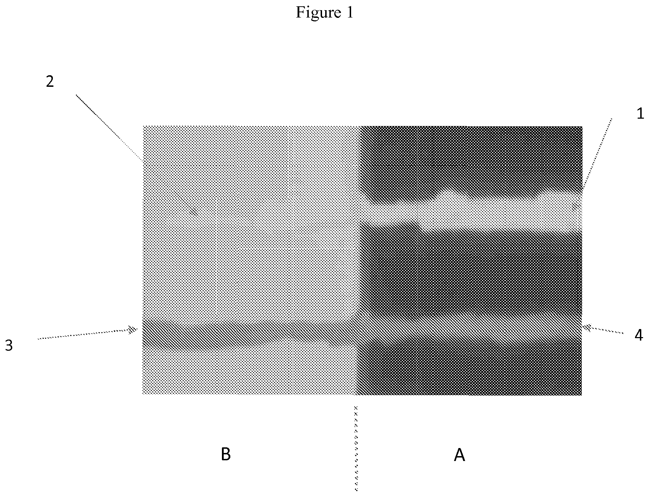

La figure 1 est un cliché photographique illustrant l'étape A) de dépose sur un substrat d'une composition adhésive aqueuse selon l'invention

Les exemples suivants illustrent l'invention, et ne sauraient être interprétés pour en limiter la portée. Dans les exemples 3 à 6, il est fait référence aux éléments répertoriés sur la figure 1.

### Exemple 1 (selon l'invention) : composition adhésive aqueuse constituée de copolymère EVA, de riboflavine et d'eau

On prépare par simple mélange une composition constituée de 45 % (% poids, en équivalent extrait sec) de Mowilith^{®} LDM 1081, de 0,01 % poids/poids de Riboflavine et de 55% poids/poids d'eau.

### Exemple 2 (Référence) : composition adhésive aqueuse constituée de copolymère EVA, d'Optiblanc NF et d'eau

On répète l'exemple 1 en remplaçant la riboflavine par l'Optiblanc NF, disponible auprès de la société 3V Sigma, et qui est souvent utilisé comme détecteur de la présence de points ou traits de colle sur un substrat (ou traceur) en présence d'une source de rayons UV. Ce composé est le sel tétrasodique de l'acide 4,4'-bis[[4-[bis(2-hydroxyethyl)amino]-6-(4-sulphoanilino)-1,3,5-triazin-2-yl]amino]stilbene-2,2'-disulphonique] qui peut être excité par un rayonnement de longueur d'onde 350 nm, et réémet un rayonnement de longueur d'onde 430 nm.

### Exemple 3 (Référence) : dépose sur un substrat sans azurant optique de la composition de l'exemple 2

On utilise comme substrat un papier blanc absorbant de laboratoire qui est exempt d'azurant optique, sous la forme d'une feuille au format A4, correspondant à la feuille A de la figure 1.

Dans une chambre obscure, on applique au moyen d'une pipette sur ladite feuille placée horizontalement, et parallèlement à sa largeur, un trait 1 de la composition adhésive de l'exemple 2, d'épaisseur environ 1 cm, qui est situé dans la moitié supérieure de la feuille A.

En présence d'une source UV, on procède à la prise d'un cliché photographique, représenté à la figure 1, qui fait apparaître un contraste élevé entre ledit trait 1, qui apparaît en clair, et le substrat, plus sombre, correspondant à la feuille A.

### Exemple 4 (référence) : dépose sur un substrat avec azurant optique de la composition de l'exemple de référence 2

On utilise comme substrat avec azurant optique une feuille destinée à l'impression laser, de grammage 80 g/m2. Cette feuille, correspondant à la feuille B de la figure 1, est placée également horizontalement dans la chambre obscure, et adjacente par sa longueur à la feuille A.

On applique au moyen de la pipette, sur la moitié supérieure de la feuille B, parallèlement à sa largeur et dans le prolongement du trait 1, un trait 2 de la composition adhésive de l'exemple 2, d'épaisseur sensiblement identique audit trait 1.

La prise du cliché photographique en présence de la source UV, ne permet pas de distinguer le trait 2, en raison d'un contraste insuffisant avec la feuille B à laquelle la présence de l'azurant optique confère un aspect aussi clair que ledit trait 2.

### Exemple 5 (selon l'invention) : dépose sur un substrat avec azurant optique de la composition de l'exemple 1 selon l'invention

On répète l'exemple 4, en appliquant sur la moitié inférieure de la feuille B de la figure 1, et parallèlement à sa largeur, un trait 3 de la composition adhésive de l'exemple 1, d'épaisseur sensiblement identique audit trait 1.

La prise du cliché photographique en présence de la source UV, permet de révéler très précisément ledit trait 3, qui présente un excellent contraste avec la feuille B.

### Exemple 6 (selon l'invention) : dépose sur un substrat exempt d'azurant optique de la composition de l'exemple 1 selon l'invention

On répète l'exemple 5, en appliquant sur la moitié inférieure de la feuille A de la figure 1, parallèlement à sa largeur et dans le prolongement du trait 3, un trait 4 de la composition adhésive de l'exemple 1, d'épaisseur sensiblement identique audit trait 3.

La prise du cliché photographique en présence de la source UV, permet de révéler très précisément ledit trait 4, qui présente un excellent contraste avec la feuille A.

## Revendications

1. Procédé de fabrication d'emballages rigides à partir d'un substrat cartonné contenant au moins un azurant optique, ledit procédé comprenant une étape A) de dépose sur ledit substrat d'une composition adhésive aqueuse comprenant :
- un polymère P choisi parmi un homopolymère d'acétate de vinyle et un copolymère EVA d'éthylène et d'acétate de vinyle ; et
- un composé T choisi parmi la pyranine, la riboflavine, la vitamine E et la vitamine A.

2. Procédé selon la revendication 1, **caractérisé en ce que** le substrat cartonné est mis en oeuvre sous la forme d'un patron.

3. Procédé selon l'une des revendications 1 ou 2, **caractérisé en ce que** les emballages rigides se présentent sous la forme d'un parallélépipède rectangle, et sont fabriqués à partir d'un patron qui comprend les 6 faces planes rectangulaires dudit parallélépipède et des pattes latérales.

4. Procédé selon la revendication 3, **caractérisé en ce que** la composition adhésive est déposée sur les pattes latérales du patron.

5. Procédé selon la revendication 4, **caractérisé en ce que** la composition adhésive est également déposée sur une ou des pattes latérales exemptes d'azurant optique.

6. Procédé selon l'une des revendications 1 à 5, **caractérisé en ce que** la composition adhésive est déposée au moyen d'une buse sans contact et sous la forme de traits et/ou de points.

7. Procédé selon la revendication 6, **caractérisé en ce qu'**il comprend consécutivement à l'étape A), une étape B) de détection, en présence d'une source de rayons UV et au moyen d'un détecteur photographique, de la position des points et/ou traits de composition adhésive.

8. Procédé selon l'une des revendications 1 à 7, **caractérisé en ce que** le composé T compris dans la composition adhésive aqueuse est choisi parmi la riboflavine, la vitamine E et la vitamine A.

9. Procédé selon l'une des revendications 1 à 8, **caractérisé en ce que** la quantité de composé T compris dans la composition adhésive aqueuse varie de 0,001 à 1 % en poids, de préférence de 0,005 à 0,05 %, sur la base du poids total de ladite composition.

10. Procédé selon l'une des revendications 1 à 8, **caractérisé en ce que** le polymère P compris dans la composition adhésive est un copolymère EVA d'éthylène et d'acétate de vinyle.

11. Procédé selon l'une des revendications 1 à 9, **caractérisé en ce que** le copolymère d'éthylène et d'acétate de vinyle est formé à partir d'une quantité supérieure à 50 % d'acétate de vinyle, ledit pourcentage étant exprimé en poids sur la base du poids total des 2 comonomères.

12. Composition adhésive aqueuse comprenant :
- un polymère P choisi parmi un homopolymère d'acétate de vinyle, un copolymère EVA d'éthylène et d'acétate de vinyle ; et
- un composé T choisi parmi la pyranine, la riboflavine, la vitamine E et la vitamine A.

## Patentansprüche

1. Verfahren zur Herstellung von steifen Verpackungen aus einem Kartonsubstrat, das mindestens einen optischen Aufheller enthält, wobei das Verfahren einen Schritt A) des Aufbringens einer wässrigen Klebstoffzusammensetzung auf das Substrat umfasst, die umfasst:
- ein Polymer P, das unter einem Vinylacetat-Homopolymer und einem Ethylen-Vinylacetat-Copolymer EVA gewählt ist; und
- eine Verbindung T, die unter Pyranin, Riboflavin, Vitamin E und Vitamin A gewählt ist.

2. Verfahren nach Anspruch 1, **dadurch gekennzeichnet, dass** das Kartonsubstrat in Form eines Zuschnitts eingesetzt wird.

3. Verfahren nach einem der Ansprüche 1 oder 2, **dadurch gekennzeichnet, dass** die steifen Verpackungen in Form eines Quaders vorliegen und aus einem Zuschnitt hergestellt werden, der die 6 rechteckigen ebenen Seitenflächen des Quaders und seitlichen Laschen umfasst.

4. Verfahren nach Anspruch 3, **dadurch gekennzeichnet, dass** die Klebstoffzusammensetzung auf die seitlichen Laschen des Zuschnitts aufgebracht wird.

5. Verfahren nach Anspruch 4, **dadurch gekennzeichnet, dass** die Klebstoffzusammensetzung auch auf eine oder mehrere der seitlichen Laschen aufgebracht, die frei von optischem Aufheller sind.

6. Verfahren nach einem der Ansprüche 1 bis 5, **dadurch gekennzeichnet, dass** die Klebstoffzusammensetzung kontaktlos mittels einer Düse und in Form von Strichen und/oder von Punkten aufgebracht wird.

7. Verfahren nach Anspruch 6, **dadurch gekennzeichnet, dass** es nach dem Schritt A) einen Schritt B) des Detektierens, in Gegenwart einer UV-Strahlen-Quelle und mittels eines Kamerasensors, der Position der Punkte und/oder Striche der Klebstoffzusammensetzung umfasst.

8. Verfahren nach einem der Ansprüche 1 bis 7, **dadurch gekennzeichnet, dass** die in der wässrigen Klebstoffzusammensetzung enthaltene Verbindung T unter Riboflavin, Vitamin E und Vitamin A gewählt ist.

9. Verfahren nach einem der Ansprüche 1 bis 8, **dadurch gekennzeichnet, dass** die in der wässrigen Klebstoffzusammensetzung enthaltene Menge der Verbindung T von 0,001 bis 1 Gew.-%, bevorzugt von 0,005 bis 0,05 %, auf der Basis des Gesamtgewichts der Zusammensetzung variiert.

10. Verfahren nach einem der Ansprüche 1 bis 8, **dadurch gekennzeichnet, dass** das in der Klebstoffzusammensetzung enthaltene Polymer P ein Ethylen-Vinylacetat-Copolymer EVA ist.

11. Verfahren nach einem der Ansprüche 1 bis 9, **dadurch gekennzeichnet, dass** das Ethylen-Vinylacetat-Copolymer aus einer Menge von mehr als 50 % Vinylacetat gebildet wird, wobei der Prozentanteil gewichtsbezogen auf der Grundlage des Gesamtgewichts der 2 Comonomere ausgedrückt wird.

12. Wässrige Klebstoffzusammensetzung, umfassend:
- ein Polymer P, das unter einem Vinylacetat-Homopolymer, einem Ethylen-Vinylacetat-Copolymer EVA gewählt ist; und
- eine Verbindung T, die unter Pyranin, Riboflavin, Vitamin E und Vitamin A gewählt ist.

## Claims

1. Method for manufacturing rigid packagings from a cardboard substrate containing at least one optical brightener, said method comprising a step A) of depositing, on said substrate, an aqueous adhesive composition comprising:
- a polymer P chosen from a vinyl acetate homopolymer and an ethylene-vinyl acetate EVA copolymer; and
- a compound T chosen from pyranine, riboflavin, vitamin E and vitamin A.

2. Method according to Claim 1, **characterized in that** the cardboard substrate is implemented in the form of a blank.

3. Method according to either of Claims 1 and 2, **characterized in that** the rigid packagings are in the form of a rectangular parallelepiped, and are manufactured from a blank that comprises the 6 rectangular planar faces of said parallelepiped and lateral tabs.

4. Method according to Claim 3, **characterized in that** the adhesive composition is deposited on the lateral tabs of the blank.

5. Method according to Claim 4, **characterized in that** the adhesive composition is also deposited on one or more lateral tabs free of optical brightener.

6. Method according to one of Claims 1 to 5, **characterized in that** the adhesive composition is deposited by means of a non-contact nozzle and in the form of lines and/or spots.

7. Method according to Claim 6, **characterized in that** it comprises, following step A), a step B) of detecting, in the presence of a source of UV rays and by means of a photographic detector, the position of the spots and/or lines of adhesive composition.

8. Method according to one of Claims 1 to 7, **characterized in that** compound T comprised in the aqueous adhesive composition is chosen from riboflavin, vitamin E and vitamin A.

9. Method according to one of Claims 1 to 8, **characterized in that** the amount of compound T comprised in the aqueous adhesive composition varies from 0.001 to 1% by weight, preferably from 0.005 to 0.05%, on the basis of the total weight of said composition.

10. Method according to one of Claims 1 to 8, **characterized in that** the polymer P comprised in the adhesive composition is an ethylene-vinyl acetate EVA copolymer.

11. Method according to one of Claims 1 to 9, **characterized in that** the ethylene-vinyl acetate copolymer is formed from an amount greater than 500 of vinyl acetate, said percentage being expressed by weight on the basis of the total weight of the 2 comonomers.

12. Aqueous adhesive composition comprising:
- a polymer P chosen from a vinyl acetate homopolymer, an ethylene-vinyl acetate EVA copolymer; and
- a compound T chosen from pyranine, riboflavin, vitamin E and vitamin A.
